(19) Europäisches Patentamt
European Patent Office
Office européen des brevets

(11) EP 3 483 509 A1

(12) EUROPEAN PATENT APPLICATION

(43) Date of publication:
15.05.2019 Bulletin 2019/20

(51) Int Cl.:
F24C 15/20 (2006.01)

(21) Application number: 17201638.8

(22) Date of filing: 14.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Vestel Elektronik Sanayi ve Ticaret A.S.
45030 Manisa (TR)

(72) Inventors:
• ULUAG, Onur
  45030 Manisa (TR)
• BAKANOGLU, Kagan
  45030 Manisa (TR)

(74) Representative: Ascherl, Andreas et al
KEHL, ASCHERL, LIEBHOFF & ETTMAYR
Patentanwälte - Partnerschaft
Emil-Riedel-Strasse 18
80538 München (DE)

(54) **EXTRACTION DEVICE AND EXTRACTION METHOD**

(57) The present invention provides an extraction device (100, 200, 300, 400) for a cooking device (150, 350, 450), the extraction device (100, 200, 300, 400) comprising a first sound generation device (101, 201, 401) arranged around a cooking surface (151, 351, 451) of the cooking device (150, 350, 450), a second sound generation device (103, 203, 403) arranged over the cooking surface (151, 351, 451) of the cooking device (150, 350, 450) and oriented toward the first sound generation device (101, 201, 401), and a control unit (105, 305, 405) configured to control the first sound generation device (101, 201, 401) to generate first sound waves (102, 302, 402) and the second sound generation device (103, 203, 403) to generate second sound waves (104, 304, 404) that are aligned in frequency and in phase such that the overlapping sound waves (210) comprise nodes (211, 212, 213, 214, 215) that move from the first sound generation device (101, 201, 401) to the second sound generation device (103, 203, 403). Further, the present invention provides a respective extraction method.

Fig. 1

**Description**

**TECHNICAL FIELD**

The invention relates to an extraction device for a cooking device. Further the invention relates to an extraction method.

**BACKGROUND**

Although applicable to any aspiration device, the present invention will mainly be described in conjunction with aspirators for cooking devices, like e.g. kitchen cooking devices.

Cooking usually involves heating up the cooking ingredients and usually also involves fumes and vapors that are generated in the cooking vessels, e.g. pans and pots.

Usually exhaust hoods are used that may e.g. comprise a ventilation mechanism to aspire the fumes and vapors that are produced during cooking and transport them to the outside of the building and/or recondition the extracted fumes and vapors to air.

Currently, extractor hoods usually are very noisy because of the underlying ventilation motor and propeller technology. Major noise reasons of propeller based systems comprise:

- Rotational noise
- Interaction and distortion effects
- Vortex noise
- Turbulence-induced noise

Although insulation materials may be provided in extractor hoods, it is very difficult to drastically reduce the noise generated by the extractor hoods.

Accordingly, there is a need for providing a silent extractor hood for kitchens.

**SUMMARY OF THE INVENTION**

The present invention provides an extraction device with the features of claim 1 and an extraction method with the features of claim 9.

Accordingly, it is provided:

An extraction device for a cooking device, the extraction device comprising a first sound generation device arranged around a cooking surface of the cooking device, a second sound generation device arranged over the cooking surface of the cooking device and oriented toward the first sound generation device, and a control unit configured to control the first sound generation device to generate first sound waves and the second sound generation device to generate second sound waves that are aligned in frequency and in phase such that the overlapping sound waves comprise nodes that move from the first sound generation device to the second sound generation device.

Further, it is provided:

An extraction method for extracting evaporations of a cooking device, the extraction method comprising generating first sound waves with a first sound generation device arranged around a cooking surface of the cooking device, generating second sound waves with a second sound generation device arranged over the cooking surface of the cooking device and oriented toward the first sound generation device, and controlling the generation of the first sound waves and the second sound waves such that the first sound waves and the second sound waves are aligned in frequency and in phase such that the overlapping sound waves comprise nodes that move from the first sound generation device to the second sound generation device.

The present invention is based on the finding that force fields may be created using sound waves and that the force fields may be used to levitate fumes, gases and small particles that are generated during use of a cooking device.

The present invention therefore provides the extraction device with a respective first sound generation device and with a respective second sound generation device. The sound generation devices are oriented such, that the sound waves they generated overlap each other from opposing directions. With overlapping sound waves that originate in different directions, it is possible to generate a force field by providing moving nodes and antinodes in the overlapping sound waves.

To this end, the control unit controls the first and second sound generation devices such that they produce sound waves that are aligned in frequency and phase accordingly. Aligned in frequency and phase may e.g. refer to the sound waves comprising slightly different frequencies and respectively configured phases, such that the nodes and antinodes in the resulting overlapping sound wave move from the first to the second sound generation elements. The resulting overlapping sound wave may therefore be seen as moving or walking standing wave.

Nodes of the resulting sound wave constitute pressure minima and antinodes the respective maxima. In such moving standing waves particles may be "caught" in the nodes. Because of the surrounding antinodes, i.e. high pressure areas, the particles will stay in the node and move along with the node.

If the first and second sound generation devices are controlled such that the nodes move upward from the first sound generation devices and the cooking surface to the second sound generation devices, the particles will follow the nodes or travel along with the nodes.

It is understood, that the frequencies of the sound waves may be in the ultrasonic range, such that they may not be perceived by the human ear. It is further understood, that the frequencies may vary and may e.g. be adapted by the control unit according to the amount of fumes, gases and particles that are generated by cooking on the cooking surface.

Fundamentally, the frequencies of the sound waves are not related with the moving of the nodes. The frequencies of the first sound waves and the second sound waves may e.g. be equal, while the phases of the first sound waves and the second sound waves may differ. The frequency may e.g. be selected according to target object size. However, for the present invention, the target objects are in liquid or gas state. Therefore, the wavelengths of the first and second sound waves may actually be arbitrarily chosen. This also applies to liquid particles, because liquid particles may be split by the first and second sound waves and the resulting smaller particles may then be handled by the nodes that are generated by the first and second sound waves.

The initial phases of the first sound waves and the second sound waves do not affect the system performance. They only determine where the nodes and antinodes are created at startup or initial time t=0. After the startup, the control unit may change the phase of at least one of the first sound waves and the second sound waves to make the standing wave a wave with moving nodes (and antinodes). The speed of change of the phases also determines the speed of movement of the nodes and may be determined accordingly.

The extraction device of the present invention extracts fumes and gases that may be generated during use of a cooking device without any audible and disturbing sound as it is usually produced by a ventilation based extractor hood.

Further embodiments of the present invention are subject of the further subclaims and of the following description, referring to the drawings.

In an embodiment, the first sound generation device may comprise an array of first sound generation elements that are arranged around the cooking surface.

Since the fumes and gases are created on the cooking surface of the cooking device e.g. in pans or pots, the area that should be enclosed or evacuated by the extraction device is defined by the cooking surface. By arranging the first sound generation elements on the circumference or around the cooking surface, this area may be easily defined.

The first sound generation elements may e.g. comprise ultrasonic transducers, e.g. MEMS based transducers, MicroElectroMechanicalSystem. Such transducers may be provided in a very compact package and it is therefore possible to provide a gapless fence around the cooking surface.

In another embodiment, the extraction device may comprise a frame that carries the first sound generation elements.

If the first sound generation elements are provided on a frame, such a frame can be easily adapted to different cooking surfaces and may be easily installed on existing cooking devices. It is for example possible to provide the frame such that it may be embedded into a table surface around the cooking device. A corresponding recess may e.g. be formed with a router in a wooden table top.

In an embodiment, the extraction device may comprise a hood arranged over the cooking surface, wherein the second sound generation device comprises an array of second sound generation elements that are arranged on the hood, especially on a bottom edge of the hood.

The hood may have any form, like e.g. square or rectangle, sphere or the like and may carry the second sound generation elements. It is understood, that the second sound generation elements may also comprise ultrasonic transducers like the first sound generation elements.

The first and second sound generation elements may be provided in pairs. This means that one first sound generation element may be directed to one of the second sound generation elements and vice versa.

In a further embodiment, the hood may comprise an extraction opening facing the cooking surface, and a ventilation system arranged in the extraction opening.

The fumes, gases and particles are transported to the second sound generation device, e.g. to the hood of the extraction device. It may however be necessary to further process the fumes, gases and particles. With the extraction opening and the ventilation system it is easily possible to transport the fumes, gases and particles e.g. outside of a building.

However, since the ventilation system is not responsible for aspirating the fumes, gases and particles, the ventilation system may be provided with a slow turning and therefore quiet fan arrangement that does not generate a high amount of noise.

As alternative, a depositing area or surface may be provided, that catches the transported fumes, gases and particles.

In an embodiment, the second sound generation device may comprise reflectors instead of second sound generation elements. In addition, the control unit may be configured to control the first sound generation device such that the first sound waves emitted by the first sound generation device overlap with the second sound waves emitted by the reflector such that the overlapping sound waves comprise nodes that move from the first sound generation device to the reflector.

Providing reflectors in the second sound generation device simplifies the arrangement of the extraction device. Further, the control unit may be simplified since it only needs to control a single sound generation device. The reflectors may e.g. each be oriented towards one of the first sound generation elements.

In another embodiment, the extraction device may comprise a user input device configured to receive a setting command from a user. The control unit may be coupled to the user input device and may be configured to control the amplitude and/or the frequency and/or the phase of the generated first sound waves and/or second sound waves according to the setting command.

The user input device may e.g. comprise a mechanical slider or a touch-sensor based slider or buttons or the like. With the user input device the user may set the strength of the force field, i.e. the strength of the aspiration performed by the extraction device.

The control unit may then control the first sound generation device and the second sound generation device accordingly. If the control unit wants to increase the speed of the node movement, it may e.g. increase the phase difference or frequency difference between the first sound waves and the second sound waves. If the force is to be increased, the control unit may increase the amplitude of the generated sound waves.

The frequency determines the distance between nodes and antinodes. This may also be seen as the size of the particle traps that the nodes create. This size does not affect system operation and may be arbitrarily chosen, because if the target objects are in liquid form, they may be split by the pressure differences between nodes and antinodes, and each resulting sub-particle of the target object can be carried out with a different part of the resulting or overlapping wave, i.e. with another node. The amplitude defines the pressure differences between nodes and antinodes and this directly effects the carry-able object mass. The phase of the signals may be changed only in one of the sound generation devices or both. This makes the standing wave a wave with moving nodes. The rate of change of the phase determines the speed of the nodes and antinodes.

The speed of the nodes may be determined with the following formula:

$$V_n = \frac{2 \cdot V_s}{\omega} \cdot \frac{\Delta(\phi_1 + \phi_2)}{\Delta t} \frac{[1][m/s]}{[rad/s]} \frac{[rad]}{[s]}$$

where: Vn is the velocity of a node, Vs is the speed of sound in the medium, w is the angular velocity of a wave, phi(i) is the phase shift between the sound generation devices and t ist the time.

An implementation may be digital, and the phase may be varied in time. The equation may therefore also be written discrete in time with Î"a/Î"t, where Î"t is the time step of the digital controller for phase change task, and Î"a is the phase shift in each time step.

The vertical Displacement of a node from its equilibrium position which is initial steady state with no phase shift may be written as:

$$X_n = \frac{2 \cdot V_s \cdot \phi}{\omega} \frac{[1][m/s][rad]}{[rad/s]}$$

Where Vs is the speed of sound in the medium, w is the angular velocity, phi is the total phase shift in radian of both sound generation devices. Taking the time derivative gives velocity of a node.

$$V_n = \frac{2 \cdot V_s}{\omega} \cdot \dot{\phi} \frac{[1][m/s]}{[rad/s]} [rad/s] = \frac{2 \cdot V_s}{\omega} \cdot \frac{d\phi}{dt}$$

In an embodiment, the extraction device may comprise a configurable amplifier that may be coupled to the control unit and the first sound generation device and the second sound generation device. The control unit may be configured to adapt the amplitude of the generated first sound waves and/or second sound waves by configuring the amplifier.

The factor "*2" results from superposition of the 2 inverse directional waves (2 waves velocities are summed). A phase shift on only one end, i.e. in one of the sound generation devices, is sufficient for the principle of the present invention to work. Altering phase on the second end by the same amount again multiplies the result by 2:

d = [(2*Vs*(phi1+phi2)) / w] / dt in general case,

or

d = [(4*Vs*phi) / w] / dt if the shifted amount and direction is same (2*phi).

All the equations are formulated for the far field. This means that the distance from a sound generation device is greater than L, where

$$L \approx \frac{D^2}{4\lambda} \,,$$

and D is the diameter of the transducer, and lambda is the wavelength of the generated sound wave.

The amplifier may serve as a simply element that allows easily adjusting the amplitudes of the generated sound waves.

**BRIEF DESCRIPTION OF THE DRAWINGS**

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1     shows a block diagram of an embodiment of an extraction device according to the present invention;

Fig. 2     shows a block diagram of another embodiment of an extraction device according to the present invention;

Fig. 3     shows a block diagram of another embodiment of an extraction device according to the present invention;

Fig. 4     shows a block diagram of another embodiment of an extraction device according to the present invention; and

Fig. 5     shows a flow diagram of an embodiment of an extraction method according to the present invention.

In the figures like reference signs denote like elements unless stated otherwise.

**DETAILED DESCRIPTION OF THE DRAWINGS**

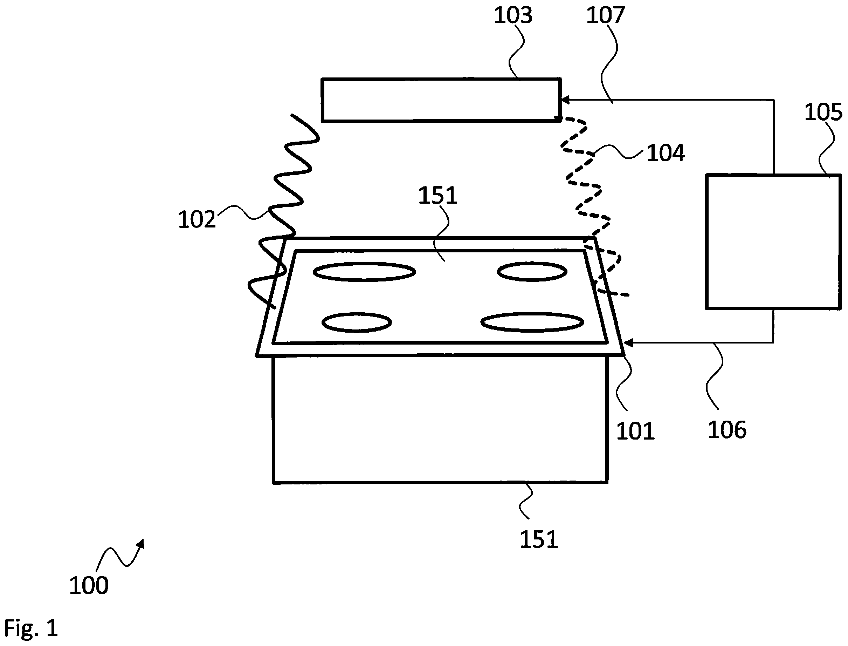

Fig. 1 shows a block diagram of an extraction device 100 for a cooking device 150 that comprises a cooking surface 151. The extraction device 100 comprises a first sound generation device 101 and a second sound generation device 103 that are both coupled to a control unit 105.

The first sound generation device 101 is arranged around the cooking surface 151 of the cooking device 150, and the second sound generation device 103 is arranged over the cooking surface 151 of the cooking device 150 and oriented toward the first sound generation device 101. The first sound generation device 101 controllably generates first sound waves 102 that are directed towards the second sound generation device 103. In addition, the second sound generation device 103 generates second sound waves 104 that are directed towards the first sound generation device 101.

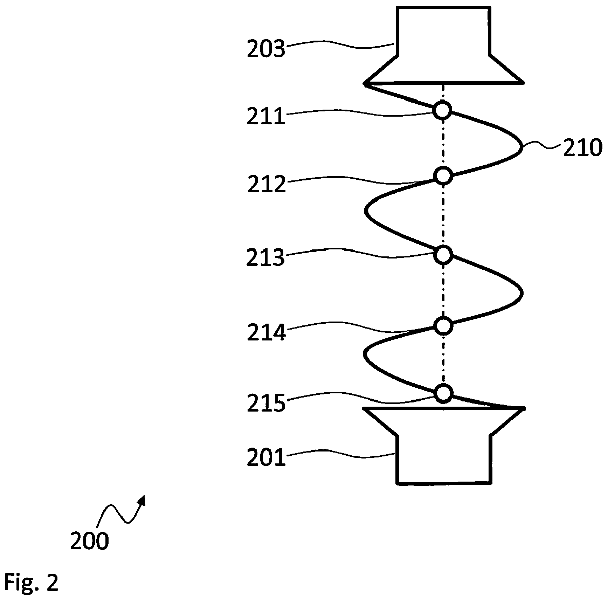

This means that the first sound waves 102 and the second sound waves 104 overlap each other in corresponding pairs and form overlapping sound waves with nodes and antinodes. This principle will be described in more detail with regard to Fig. 2.

To perform an extraction of fumes, gases or particles, the control unit 105 controls the first sound generation device 101 to generate first sound waves 102 and the second sound generation device 103 to generate second sound waves 104 that are aligned in frequency and in phase such that the overlapping sound waves comprise nodes that move from the first sound generation device 101 to the second sound generation device 103.

In those nodes fumes, gases and particles may be captured and may therefore be transported to the second sound generation device 103.

Fig. 2 shows a block diagram of an extraction device 200. To explain the working principle of the extraction device 200 only a single element of the first sound generation device 201 and a single element of the second sound generation device 203 are shown.

While the first sound waves and second sound waves emitted by the first sound generation device 201 and the second sound generation device 203 are not explicitly shown, the resulting overlapping sound wave 210 is shown. The nodes 211, 212, 213, 214, 215 are those points of the overlapping sound wave 210 that lay on the center line between the first sound generation device 201 and the second sound generation device 203.

If the frequencies and the phases of the first and second sound waves are controlled accordingly, the nodes 211, 212, 213, 214, 215 will move from the first sound generation device 201 to the second sound generation device 203. Since the nodes 211, 212, 213, 214, 215 are areas of low pressure that are surrounded by higher pressure areas, particles inside of the areas defined by the nodes 211, 212, 213, 214, 215 will be caught and follow the movement of the nodes.

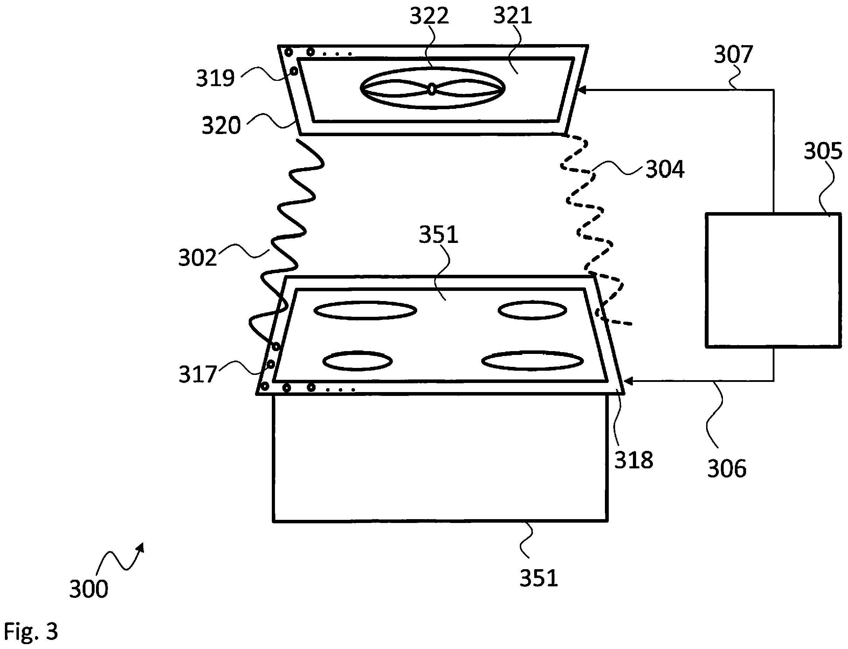

Fig. 3 shows a block diagram of an extraction device 300. The extraction device 300 is based on the extraction device 100. Therefore, the extraction device 300 also comprises a first sound generation device and a second sound generation device, which are however not explicitly shown. Instead single first sound generation elements 317 and single second sound generation elements 319 are shown. The first sound generation device comprises a plurality of such first sound generation elements 317, and the second sound generation device comprises a plurality of such second sound generation elements 319. For sake of clarity not all possible first sound generation elements 317 and second sound generation elements 319 are shown and only one first sound generation element 317 and one second sound generation element 319 is provided with a reference sign.

The first sound generation elements 317 may be provided on a frame 318 that may surround the cooking surface 351. As alternative, the first sound generation elements 317 may also be integrated into the cooking surface 351.

The second sound generation elements 319 are provided in a hood 320 that is placed over the cooking surface 351. This arrangement alone already allows transporting fumes, gases and particles from the cooking surface 351 to the hood 320.

To further aid in removing the fumes, gases and particles, the hood 320 comprises an extraction opening 321. In the extraction opening 321 a ventilation system 322 is provided. The ventilation system 322 may suck in the fumes, gases and particles that are transported to the hood 320 and blow them e.g. out of a building through an air duct.

Since the ventilation system 322 does not need to transport the particles from the cooking surface 351 to the hood 320, the ventilation system 322 may comprise a slow turning and low noise fan arrangement.

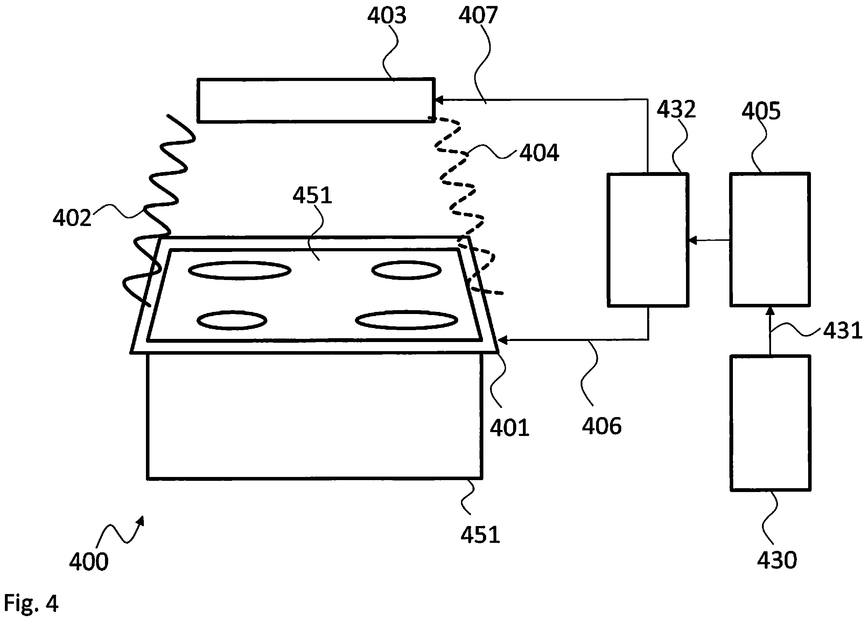

Fig. 4 shows a block diagram of an extraction device 400. The extraction device 400 is based on the extraction device 100. Therefore, the extraction device 400 also comprises a first sound generation device 101 arranged around the cooking surface 451 of the cooking device 450. Further, the extraction device 400 comprises the second sound generation device 403, and the control unit 405.

In the extraction device 400 the control unit 405 is not directly coupled to the first sound generation device 401 and the second sound generation device 403. Instead a configurable amplifier 432 is provided between the control unit 405 and the first sound generation device 401 and the second sound generation device 403. The control unit 405 may configure the amplification factor of the configurable amplifier 432 according to a required amplitude of the first sound waves 402 and the second sound waves 404.

In addition, the extraction device 400 comprises a user input device 430 that is coupled to the control unit 405. Via the user input device 430 a user may input a setting command 431 for setting the strength of the suction effect that the extraction device 400 creates. The control unit 405 may then e.g. control the speed of the nodes and/or the amplitudes of the generated first sound waves 402 and the second sound waves 404 accordingly.

It is understood, that the elements shown with regard to extraction device 400 may also be used with the extraction device 100 and the extraction device 300, especially the user input device 430 and the configurable amplifier 432.

Further, it is understood that in all embodiments, the control unit 105, 305, 405 may comprise hardware, software or a combination of both. The control unit 105, 305, 405 may e.g. be implemented as a firmware that is executed by a controller.

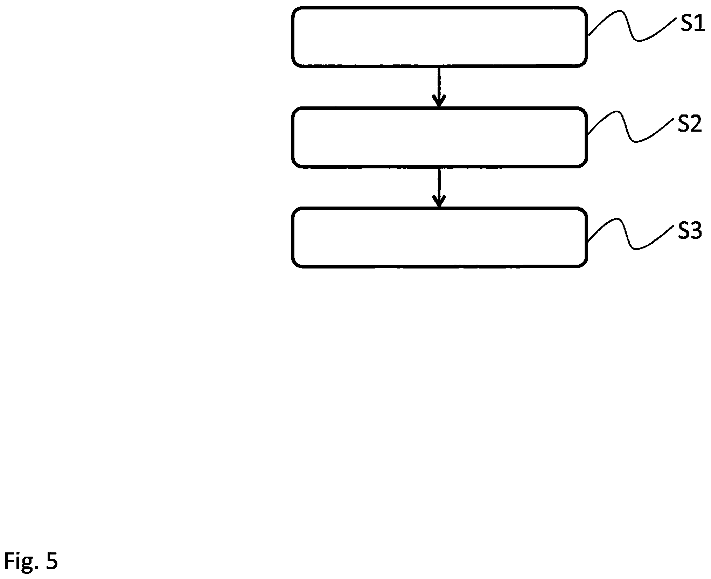

For sake of clarity in the following description of the method based Fig. 5 the reference signs used above in the description of apparatus based Figs. 1 - 4 will be maintained.

Fig. 5 shows a flow diagram of an extraction method for extracting evaporations of a cooking device 150, 350, 450.

The extraction method comprises generating S1 first sound waves 102, 302, 402 with a first sound generation device 101, 201, 401 arranged around a cooking surface 151, 351, 451 of the cooking device 150, 350, 450, generating S2 second sound waves 104, 304, 404 with a second sound generation device 103, 203, 403 arranged over the cooking surface 151, 351, 451 of the cooking device 150, 350, 450 and oriented toward the first sound generation device 101, 201, 401, and controlling S3 the generation of the first sound waves 102, 302, 402 and the second sound waves 104, 304, 404 such that the first sound waves 102, 302, 402 and the second sound waves 104, 304, 404 are aligned in frequency and in phase such that the overlapping sound waves 210 comprise nodes 211, 212, 213, 214, 215 that move from the first sound generation device 101, 201, 401 to the second sound generation device 103, 203, 403.

The first sound waves 102, 302, 402 may e.g. be generated by an array of first sound generation elements 317 that are arranged around the cooking surface 151, 351, 451. The first sound generation elements 317 may e.g. be arranged on a respective frame 318.

The second sound waves 104, 304, 404 may be generated with an array of second sound generation elements 319 that may be arranged on a hood 320 arranged over the cooking surface 151, 351, 451. The second sound generation elements 319 may e.g. be arranged on a bottom edge of the hood 320.

The extraction method may further comprise extracting evaporations of the cooking surface 151, 351, 451 via an extraction opening 321 of the hood 320 that is facing the cooking surface 151, 351, 451 and a ventilation system 322 arranged in the extraction opening 321.

As alternative to the second sound generation elements 319, the second sound waves 104, 304, 404 may also be generated with reflectors. Controlling S1 then comprises controlling the first sound generation device 101, 201, 401 such that the sound waves emitted by the first sound generation device 101, 201, 401 overlap with the sound waves emitted by the reflector such that the overlapping sound waves 210 comprise nodes 211, 212, 213, 214, 215 that move from the first sound generation device 101, 201, 401 to the reflector.

The extraction method may also comprise receiving a setting command 431 from a user. Accordingly, controlling S1 may comprise controlling the amplitude and/or the frequency and/or the phase of the generated sound waves according to the setting command 431.

Controlling may further comprise configuring a configurable amplifier 432 that is coupled to the first sound generation device 101, 201, 401 and the second sound generation device 103, 203, 403 to adapt the amplitude of the generated first sound waves 102, 302, 402 and second sound waves 104, 304, 404.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides an extraction device 100, 200, 300, 400 for a cooking device 150, 350, 450, the extraction device 100, 200, 300, 400 comprising a first sound generation device 101, 201, 401 arranged around a cooking surface 151, 351, 451 of the cooking device 150, 350, 450, a second sound generation device 103, 203, 403 arranged over the cooking surface 151, 351, 451 of the cooking device 150, 350, 450 and oriented toward the first sound generation device 101, 201, 401, and a control unit 105, 305, 405 configured to control the first sound generation device 101, 201, 401 to generate first sound waves 102, 302, 402 and the second sound generation device 103, 203, 403 to generate second sound waves 104, 304, 404 that are aligned in frequency and in phase such that the overlapping sound waves 210 comprise nodes 211, 212, 213, 214, 215 that move from the first sound generation device 101, 201, 401 to the second sound generation device 103, 203, 403. Further, the present invention provides a respective extraction method.

**List of reference signs**

| | |
|---|---|
| 100, 200, 300, 400 | extraction device |
| 101, 201, 401 | first sound generation device |
| 102, 302, 402 | first sound wave |
| 103, 203, 403 | second sound generation device |
| 104, 304, 404 | second sound wave |
| 105, 305, 405 | control unit |
| 106, 107, 306, 307, 406, 407 | control signal |
| | |
| 210 | overlapping sound wave |
| 211, 212, 213, 214, 215 | node |
| | |
| 317 | first sound generation element |
| 318 | frame |
| 319 | second sound generation element |
| 320 | hood |
| 321 | extraction opening |
| 322 | ventilation system |
| | |
| 430 | user input device |
| 431 | setting command |
| 432 | configurable amplifier |
| | |
| 150, 350, 450 | cooking device |
| 151, 351, 451 | cooking surface |

**Claims**

1. Extraction device (100, 200, 300, 400) for a cooking device (150, 350, 450), the extraction device (100, 200, 300, 400) comprising:

   a first sound generation device (101, 201, 401) arranged around a cooking surface (151, 351, 451) of the cooking device (150, 350, 450),
   a second sound generation device (103, 203, 403) arranged over the cooking surface (151, 351, 451) of the cooking device (150, 350, 450) and oriented toward the first sound generation device (101, 201, 401), and
   a control unit (105, 305, 405) configured to control the first sound generation device (101, 201, 401) to generate first sound waves (102, 302, 402) and the second sound generation device (103, 203, 403) to generate second sound waves (104, 304, 404) that are aligned in frequency and in phase such that the overlapping sound waves (210) comprise nodes (211, 212, 213, 214, 215) that move from the first sound generation device (101, 201, 401) to the second sound generation device (103, 203, 403).

2. Extraction device (100, 200, 300, 400) according to claim 1, wherein the first sound generation device (101, 201, 401) comprises an array of first sound generation elements (317) that are arranged around the cooking surface (151, 351, 451).

3. Extraction device (100, 200, 300, 400) according to claim 2, comprising a frame (318) that carries the first sound generation elements (317).

4. Extraction device (100, 200, 300, 400) according to any one of the preceding claims, comprising a hood (320) arranged over the cooking surface (151, 351, 451), wherein the second sound generation device (103, 203, 403) comprises an array of second sound generation elements (319) that are arranged on the hood (320), especially on a bottom edge of the hood (320).

5. Extraction device (100, 200, 300, 400) according to claim 4, wherein the hood (320) comprises an extraction opening (321) facing the cooking surface (151, 351, 451), and a ventilation system (322) arranged in the extraction opening (321).

6. Extraction device (100, 200, 300, 400) according to claim 4, wherein the second sound generation device (103, 203, 403) comprises reflectors instead of second sound generation elements (319), and wherein the control unit (105, 305, 405) is configured to control the first sound generation device (101, 201, 401) such that the first sound waves (102, 302, 402) emitted by the first sound generation device (101, 201, 401) overlap with the second sound waves (104, 304, 404) emitted by the reflector such that the overlapping sound waves (210) comprise nodes (211, 212, 213, 214, 215) that move from the first sound generation device (101, 201, 401) to the reflector.

7. Extraction device (100, 200, 300, 400) according to any one of the preceding claims, comprising a user input device (430) configured to receive a setting command (431) from a user, wherein the control unit (105, 305, 405) is coupled to the user input device (430) and is configured to control the amplitude and/or the frequency and/or the phase of the generated first sound waves (102, 302, 402) and/or second sound waves (104, 304, 404) according to the setting command (431).

8. Extraction device (100, 200, 300, 400) according to any one of the preceding claims, comprising a configurable amplifier (432) that is coupled to the control unit (105, 305, 405) and the first sound generation device (101, 201, 401) and the second sound generation device (103, 203, 403), wherein the control unit (105, 305, 405) is configured to adapt the amplitude of the generated first sound waves (102, 302, 402) and/or second sound waves (104, 304, 404) by configuring the amplifier.

9. Extraction method for extracting evaporations of a cooking device (150, 350, 450), the extraction method comprising:

generating (S1) first sound waves (102, 302, 402) with a first sound generation device (101, 201, 401) arranged around a cooking surface (151, 351, 451) of the cooking device (150, 350, 450),
generating (S2) second sound waves (104, 304, 404) with a second sound generation device (103, 203, 403) arranged over the cooking surface (151, 351, 451) of the cooking device (150, 350, 450) and oriented toward the first sound generation device (101, 201, 401), and
controlling (S3) the generation of the first sound waves (102, 302, 402) and the second sound waves (104, 304, 404) such that the first sound waves (102, 302, 402) and the second sound waves (104, 304, 404) are aligned in frequency and in phase such that the overlapping sound waves (210) comprise nodes (211, 212, 213, 214, 215) that move from the first sound generation device (101, 201, 401) to the second sound generation device (103, 203, 403).

10. Extraction method according to claim 9, wherein the first sound waves (102, 302, 402) are generated by an array of first sound generation elements (317) that are arranged around the cooking surface (151, 351, 451), especially wherein the first sound generation elements (317) are provided on a frame (318).

11. Extraction method according to any one of the preceding claims 9 to 10, wherein the second sound waves (104, 304, 404) are generated with an array of second sound generation elements (319) that are arranged on a hood (320) arranged over the cooking surface (151, 351, 451), especially on a bottom edge of the hood (320), and especially comprising extracting evaporations of the cooking surface (151, 351, 451) via an extraction opening (321) of the hood (320) that is facing the cooking surface (151, 351, 451) and a ventilation system (322) arranged in the extraction opening (321).

12. Extraction method according to claim 11, wherein the second sound waves (104, 304, 404) are generated with reflectors instead of second sound generation elements (319), and wherein controlling comprises controlling the first sound generation device (101, 201, 401) such that the sound waves emitted by the first sound generation device (101, 201, 401) overlap with the sound waves emitted by the reflector such that the overlapping sound waves (210) comprise nodes (211, 212, 213, 214, 215) that move from the first sound generation device (101, 201, 401) to the reflector.

13. Extraction method according to any one of the preceding claims 9 to 12, comprising receiving a setting command (431) from a user, wherein controlling comprises controlling the amplitude and/or the frequency and/or the phase of the generated sound waves according to the setting command (431).

14. Extraction method according to any one of the preceding claims 9 to 13, wherein controlling comprises configuring a configurable amplifier (432) that is coupled to the first sound generation device (101, 201, 401) and the second sound generation device (103, 203, 403) to adapt the amplitude of the generated first sound waves (102, 302, 402) and second sound waves (104, 304, 404).

Fig. 1

Fig. 2

Fig. 3

EP 3 483 509 A1

403    407

432    405

404

451

402

401    406

451

431

400

430

Fig. 4

Fig. 5

EP 3 483 509 A1

Europäisches
Patentamt

European
Patent Office

Office européen
des brevets

# EUROPEAN SEARCH REPORT

Application Number

EP 17 20 1638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 079 214 A (BISHOP RICHARD PATTEN [US]) 27 June 2000 (2000-06-27) * abstract; figures * | 1-14 | INV. F24C15/20 |
| A | US 2003/124006 A1 (DOOLEY KEVIN ALLAN [CA]) 3 July 2003 (2003-07-03) * abstract; figures * | 1-14 | |
| A | EP 0 173 435 A1 (UNILEVER PLC [GB]; UNILEVER NV [NL]) 5 March 1986 (1986-03-05) * claim 1 * | 1-14 | |
| A | US 2016/372106 A1 (HANAZONO MASAYA [JP] ET AL) 22 December 2016 (2016-12-22) * figure 1 * | 1-14 | |

TECHNICAL FIELDS
SEARCHED        (IPC)

F24C
F04F
F02G
F24F
F04D

The present search report has been drawn up for all claims

| Place of search | Date of completion of the search | Examiner |
|---|---|---|
| The Hague | 23 April 2018 | Adant, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 1638

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2018

| Patent document cited in search report | | Publication date | Patent family member(s) | | Publication date |
|---|---|---|---|---|---|
| US 6079214 | A | 27-06-2000 | NONE | | |
| US 2003124006 | A1 | 03-07-2003 | CA | 2470681 A1 | 24-07-2003 |
| | | | EP | 1458983 A1 | 22-09-2004 |
| | | | JP | 4098720 B2 | 11-06-2008 |
| | | | JP | 2005515354 A | 26-05-2005 |
| | | | US | 2003124006 A1 | 03-07-2003 |
| | | | US | 2004086399 A1 | 06-05-2004 |
| | | | WO | 03060329 A1 | 24-07-2003 |
| EP 0173435 | A1 | 05-03-1986 | DE | 3574232 D1 | 21-12-1989 |
| | | | EP | 0173435 A1 | 05-03-1986 |
| | | | JP | H0521001 B2 | 23-03-1993 |
| | | | JP | S6178411 A | 22-04-1986 |
| | | | US | 4688199 A | 18-08-1987 |
| US 2016372106 | A1 | 22-12-2016 | JP | 2015169836 A | 28-09-2015 |
| | | | US | 2016372106 A1 | 22-12-2016 |
| | | | WO | 2015133094 A1 | 11-09-2015 |

EPO FORM P0459

For more details about this annex : see Official Journal of the European Patent Office, No. 12/82